# EUROPEAN PATENT SPECIFICATION

(11) **EP 4 223 412 B1**
(45) Date of publication and mention of the grant of the patent: **23.07.2025**
(21) Application number: 21874900.0
(22) Date of filing: 03.08.2021
(51) Int. Cl.: B01J 27/232, C01B 3/04

(54) **AMMONIA DECOMPOSITION CATALYST**
KATALYSATOR ZUR ZERSETZUNG VON AMMONIAK
CATALYSEUR DE DÉCOMPOSITION D'AMMONIAC

(30) Priority: 29.09.2020 JP 2020163651
(43) Date of publication of application: 09.08.2023
(73) Proprietor: Nippon Shokubai Co., Ltd., Osaka-shi, Osaka 541-0043 (JP)
(72) Inventor: KITAGUCHI, Shinya, Himeji-shi, Hyogo 671-1282 (JP); HIGUCHI, Yasuhiro, Himeji-shi, Hyogo 671-1282 (JP); ARITA, Yoshitaka, Suita-shi, Osaka 564-0034 (JP)
(74) Representative: Müller-Boré & Partner Patentanwälte PartG mbB
(86) International application number: PCT/JP2021/028819
(87) International publication number: WO 2022/070597

(56) References cited:
- WO-A1-2010/107065
- WO-A1-2019/188219
- JP-A- 2016 060 654
- JP-A- 2017 124 366
- JP-B2- 5 483 705
- US-A1- 2020 062 590

## Description

### TECHNICAL FIELD

The present invention relates to an ammonia decomposition catalyst that is capable of efficiently decomposing ammonia into nitrogen and hydrogen and that has high strength, and a method for producing hydrogen and nitrogen using the ammonia decomposition catalyst.

### BACKGROUND ART

Hydrogen has properties that hydrogen easily covalently binds to other atoms, only water is produced at the time of combustion thereof, and the calorific value thereof per unit mass is large. Thus, hydrogen is used for desulfurization in petroleum refinery and production of petroleum products. Demand for hydrogen as a fuel for fuel cells is increasing in recent years. An industrial gas supplier or the like installs a hydrogen production apparatus in an industrial plant or the like of a user for on-site supply of hydrogen in many cases. In addition, the supply of hydrogen from a hydrogen production site to a hydrogen station is expected to increase in the future.

Delivery of high pressure hydrogen gas, delivery of liquid hydrogen and delivery of an organic hydride are considered as a delivery means of hydrogen. Such high pressure hydrogen gas and liquid hydrogen are however very dangerous at the time of an accident. For example, it is considered as a delivery means of an organic hydride that toluene is reduced to obtain methylcyclohexane, relatively safe methylcyclohexane is delivered, and the delivered methylcyclohexane is dehydrogenated to obtain hydrogen in a demand place. This method however has a problem that extra energy is required for the reduction of toluene and the dehydrogenation of methylcyclohexane after hydrogen is once produced.

Thus, ammonia attracts attention as a hydrogen carrier. The industrial production method of ammonia itself has been well-established from a long time ago. In addition, ammonia can be easily liquefied even at room temperature and has a high volumetric hydrogen density of about 1.5 to 2.5 times in comparison with liquid hydrogen. On the one hand, the technology to efficiently produce hydrogen from ammonia after delivering ammonia has been still required.

For example, Patent document 1 discloses an ammonia decomposition catalyst that contains an iron group metal and a metal oxide and does not contain a noble metal. Highly pure hydrogen can be obtained by efficiently decomposing ammonia into hydrogen and nitrogen in a broad ammonia concentration range from low concentration to high concentration, at a relatively low temperature and at a high space velocity by the catalyst.

Patent document 2 discloses the catalyst to efficiently produce hydrogen from ammonia. The catalyst contains an element selected from nickel, cobalt and iron, an element selected from strontium and barium, and a lanthanoid except for lanthanum and cerium.

Patent document 3 discloses the catalyst to efficiently produce hydrogen from ammonia. The catalyst contains an element selected from nickel, cobalt and iron, an element selected from strontium and barium, a rare earth element and magnesium.

Patent document 4 discloses the catalyst to efficiently produce hydrogen from ammonia. The catalyst contains cobalt, yttrium, and an alkaline-earth metal selected from strontium and barium in the specific proportions.

JP5483705 B2 discloses a mixed oxide for the decomposition of ammonia comprising a mixed oxide comprising cobalt, barium and ceria-zirconia.

### PRIOR ART DOCUMENT

### PATENT DOCUMENT

Patent document 1: JP 2010-94668 A
Patent document 2: JP 2016-203052 A
Patent document 3: JP 2019-11212 A
Patent document 4: JP 2020-027817 A

### DISCLOSURE OF THE INVENTION

### PROBLEMS TO BE SOLVED BY THE INVENTION

Various catalysts to efficiently produce hydrogen by decomposing ammonia have been developed as described above; however, an ammonia decomposition catalyst having much higher efficiency and strength is required with the increase in the usage amount of hydrogen.

The objective of the present invention is to provide an ammonia decomposition catalyst that is capable of efficiently decomposing ammonia into nitrogen and hydrogen and that has high mechanical strength, and a method for producing hydrogen and nitrogen by using the ammonia decomposition catalyst.

### MEANS FOR SOLVING THE PROBLEMS

The inventors of the present invention made extensive studies to solve the above-described problems. As a result, the inventors completed the present invention by finding that the ammonia decomposition catalyst comprising the specific calcium compound is excellent in the activity to decompose ammonia and has high mechanical strength.

Hereinafter, the first present invention is described.
[1] An ammonia decomposition catalyst,
   comprising:
   cobalt (A);
   one or more rare earth elements (B) selected from cerium, yttrium and lanthanum;
   one or more alkaline-earth metal elements (C) selected from barium and strontium;
   zirconium (D); and
   one or more calcium compounds (E) selected from calcium carbonate, calcium oxide and calcium hydroxide;
   wherein the ammonia decomposition catalyst comprises the cobalt (A), the rare earth element (B), the alkaline-earth metal element (C) and the zirconium (D) as metals or oxides.
[2] The ammonia decomposition catalyst according to the above [1], wherein a content proportion of the cobalt (A) is 30 mass% or more in terms of oxide.
[3] The ammonia decomposition catalyst according to the above [1] or [2], wherein:
   a content proportion of the rare earth element (B) is 1 mass% or more and 24 mass% or less in terms of oxide,
   a content proportion of the alkaline-earth metal element (C) is 0.1 mass% or more and 10 mass% or less in terms of oxide, and
   a content proportion of the zirconium (D) is 0.1 mass% or more and 10 mass% or less in terms of oxide.
[4] The ammonia decomposition catalyst according to any one of the above [1] to [3], wherein a content proportion of the calcium compound (E) is 10 mass% or more.
[5] A method for producing hydrogen and nitrogen, the method comprising the steps of:
   subjecting the ammonia decomposition catalyst according to any one of the above [1] to [4] to a reduction treatment, and
   decomposing ammonia into hydrogen and nitrogen by contacting a gas comprising ammonia with the ammonia decomposition catalyst subjected to the reduction treatment.
[6] Use of a catalyst for decomposing ammonia, wherein:
   the catalyst comprises cobalt (A); one or more rare earth elements (B) selected from cerium, yttrium and lanthanum; one or more alkaline-earth metal elements (C) selected from barium and strontium; zirconium (D); and one or more calcium compounds (E) selected from calcium carbonate, calcium oxide and calcium hydroxide; and
   the ammonia decomposition catalyst comprises the cobalt (A), the rare earth element (B), the alkaline-earth metal element (C) and the zirconium (D) as metals or oxides.
[7] The use according to the above [6], wherein a content proportion of the cobalt (A) in the catalyst is 30 mass% or more in terms of oxide.
[8] The use according to the above [6] or [7], wherein:
   a content proportion of the rare earth element (B) in the catalyst is 1 mass% or more and 24 mass% or less in terms of oxide,
   a content proportion of the alkaline-earth metal element (C) in the catalyst is 0.1 mass% or more and 10 mass% or less in terms of oxide, and
   a content proportion of the zirconium (D) in the catalyst is 0.1 mass% or more and 10 mass% or less in terms of oxide.
[9] The use according to any one of the above [6] to [8], wherein a content proportion of the calcium compound (E) in the catalyst is 10 mass% or more.

### EFFECT OF THE INVENTION

Hydrogen and nitrogen can be efficiently produced by using the ammonia decomposition catalyst of the present invention. The ammonia decomposition catalyst of the present invention has a long life, since the compact or the like thereof has high mechanical strength. In addition, the ammonia decomposition catalyst of the present invention is relatively inexpensive, since the catalyst may not comprise an expensive noble metal as an active metal. The present invention is therefore industrially useful, since the present invention contributes to the coming hydrogen society.

### MODE FOR CARRYING OUT THE INVENTION

The present invention is hereinafter described in detail. Two or more of the preferred embodiments described below may be combined, and such a combination is also a preferred embodiment of the present invention.

The ammonia decomposition catalyst of the present invention is abbreviated as the "present invention catalyst" in some cases and comprises cobalt (A); one or more rare earth elements (B) selected from cerium, yttrium and lanthanum; one or more alkaline-earth metal elements (C) selected from barium and strontium; zirconium (D); and one or more calcium compounds (E) selected from calcium carbonate, calcium oxide and calcium hydroxide.

A catalyst to accelerate a reaction to decompose ammonia into hydrogen and nitrogen is mainly classified into a noble metal catalyst containing a noble metal such as ruthenium as an active metal and a base metal catalyst that does not contain a noble metal as an active metal. Since it is practically not preferred to use an expensive noble metal, a relatively inexpensive base metal is used as an active metal in the present invention.

The present invention catalyst indispensably comprises cobalt (A) as an active metal. The content proportion of cobalt (A) in the present invention catalyst is preferably 30 mass% or more in terms of oxide. The reason why a content proportion of each element is described in terms of oxide in this disclosure is that the metal element may be comprised as an oxide, since the present invention catalyst is produced by burning at high temperature in the air in the final stage. In addition, the present invention catalyst is reduced before use and it is dependent on the reduction condition whether all of each metal element is reduced, only a part thereof is reduced or all of the elements are not reduced in the reduction stage. The content proportion of cobalt (A) in terms of oxide is preferably 40 mass% or more, more preferably 45 mass% or more, even more preferably 50 mass% or more, and preferably 80 mass% or less, more preferably 75 mass% or less, even more preferably 70 mass% or less.

The content proportion of the rare earth element (B) in the present invention catalyst in terms of oxide is preferably 1 mass% or more and 24 mass% or less. The content proportion is preferably 1.5 mass% or more, more preferably 2 mass% or more, even more preferably 2.5 mass% or more, and preferably 20 mass% or less, more preferably 15 mass% or less or 10 mass% or less.

One of cerium, yttrium and lanthanum may be used, or 2 kinds or 3 kinds of them may be used in combination as the rare earth element (B). Cerium and/or yttrium is preferred and cerium or yttrium is more preferred as the rare earth element (B).

The content proportion of the alkaline-earth metal element (C) in the present invention catalyst in terms of oxide is preferably 0.1 mass% or more and 10 mass% or less. The content proportion is preferably 0.3 mass% or more, more preferably 0.4 mass% or more, even more preferably 0.5 mass% or more, and preferably 5 mass% or less, more preferably 3 mass% or less, even more preferably 2 mass% or less.

One of barium and strontium may be used, and barium and strontium may be used in combination as the alkaline-earth metal element (C). Barium is more preferred as the alkaline-earth metal element (C) in the present invention catalyst. When barium is used, remarkable improvement in ammonia decomposition performance at low temperature is confirmed.

The content proportion of the zirconium (D) in the present invention catalyst in terms of oxide is preferably 0.1 mass% or more and 10 mass% or less. The content proportion is preferably 0.5 mass% or more, more preferably 1 mass% or more, and preferably 8 mass% or less, more preferably 6 mass% or less.

The above-described zirconium and/or an oxide thereof may play a role as a carrier and additionally contributes to improvement of initial activity and durability performance of the catalyst.

The present invention catalyst indispensably comprises one or more calcium compounds (E) selected from calcium carbonate, calcium oxide and calcium hydroxide. A conventional catalyst containing a base metal such as iron, nickel and cobalt in a high content proportion of more than 30 mass% has a problem that when the base metal element is reduced to be activated, the volume thereof is contracted and the mechanical strength of the catalyst is deteriorated. Specifically, a reaction vessel may not be filled with a conventional catalyst compact due to the crack, break or exfoliation. Even when a reaction vessel may be filled with a conventional catalyst, the conventional catalyst may not be used for a long time. Thus, the mechanical strength of a conventional catalyst can be improved by adding alumina, silica or various clay minerals therein, but the content proportion of an active component is decreased and thus initial activity and durability performance may be deteriorated. On the one hand, the calcium compound (E) may play a role as a co-catalyst to accelerate the decomposition of ammonia in the present invention catalyst or improve the mechanical strength of the catalyst without significantly deteriorating the ammonia decomposition performance of the catalyst.

The content proportion of the calcium compound (E) in the present invention catalyst is preferably 10 mass% or more and 65 mass% or less. The content proportion is preferably 15 mass% or more or 20 mass% or more, more preferably 25 mass% or more or 30 mass% or more, and preferably 60 mass% or less, more preferably 50 mass% or less, even more preferably 45 mass% or less.

The present invention catalyst preferably comprises one or more carriers selected from alumina, silica, titania and niobium oxide in addition to the above-described cobalt (A), rare earth element (B), alkaline-earth metal element (C), zirconium (D) and calcium compound (E). The content proportion of the carrier in the present invention catalyst is preferably 0.1 mass% or more and 15 mass% or less. The content proportion is preferably 0.5 mass% or more or 1 mass% or more, more preferably 1.5 mass% or more, even more preferably 2 mass% or more, and preferably 10 mass% or less, more preferably 8 mass% or less, even more preferably 6 mass% or less. When the present invention catalyst comprises the carrier, the improvement effect of initial activity and durability performance can be expected.

The specific surface area of the carrier is preferably 10 m²/g or more in terms of the improvement of the ammonia decomposition activity. The specific surface area is more preferably 20 m²/g or more and even more preferably 100 m²/g or more. The upper limit of the specific surface area is not particularly restricted, and the specific surface area can be adjusted to, for example, 300 m²/g or less.

The content proportion of each metal component in the present invention catalyst may be determined from the amounts of metal elements contained in the raw material compounds used for producing the catalyst or may be determined by directly measuring the present invention catalyst with fluorescence X-ray.

The specific surface area of the present invention catalyst may be adjusted to, for example, 1 m²/g or more and 300 m²/g or less. When the specific surface area is 1 m²/g or more, a gas containing ammonia can be supplied into the catalyst layer more successfully. When the specific surface area is 300 m²/g or less, the contact area between an ammonia-containing gas and the catalyst can be ensured more surely to accelerate the reaction more successfully. The specific surface area is preferably 5 m²/g or more, more preferably 18 m²/g or more, and preferably 250 m²/g or less, more preferably 200 m²/g or less. The specific surface area of the present invention catalyst may be measured by an ordinary method and for example, may be measured using a general surface area measurement device such as a full automatic BET surface area measurement device ("Macsorb HM Model-1201 manufactured by Mountech).

The particle size, i.e., particle diameter, of the catalyst component that constitutes the present invention catalyst, especially the particle size of cobalt oxide as the active component of the catalyst, may be adjusted to 3 nm or more and 200 nm or less. The particle size is preferably 5 nm or more, more preferably 10 nm or more, and preferably 150 nm or less, more preferably 100 nm or less. The particle size may be determined by an ordinary method. For example, the particle size can be determined by analyzing the present invention catalyst with X-ray diffraction, determining the crystal structure from the analysis result to obtain a 2θ value, and calculating the particle size in accordance with Scherrer equation.

The shape of the present invention catalyst is not particularly restricted and for example, may be powder, globular, pellet, crushed, saddle-shaped, ring, honeycomb, monolith, fiber, cylinder and columnar.

The present invention catalyst may be produced by an ordinary method and for example, can be produced by kneading method, drying and solidifying method, coprecipitation method, impregnation method or the like, and is preferably produced by kneading method especially. More specifically, for example, the present invention catalyst can be produced by the method comprising the steps of:
dissolving or dispersing raw material compounds comprising cobalt (A); one or more rare earth elements (B) selected from cerium, yttrium and lanthanum; one or more alkaline-earth metal elements (C) selected from barium and strontium; and zirconium (D) in a solvent to obtain a solution or a suspension,
removing the solvent from the solution or the suspension to obtain a dried substance, and
burning the dried substance to obtain a burnt substance,
wherein one or more calcium compounds (E) selected from calcium carbonate, calcium oxide and calcium hydroxide are added to the solution or the suspension, or are mixed in the burnt substance.

The raw material compounds of the catalyst constituent components are not particularly restricted. An example of the raw material compound of cobalt (A) includes a solid raw material compound such as cobalt oxide, basic cobalt carbonate and cobalt hydroxide; and basic cobalt carbonate is particularly preferably used, since the specific surface area of the produced catalyst can be larger. The raw material compounds of the rare earth element (B), the alkaline-earth metal element (C) and zirconium (D) are not particularly restricted as long as the raw material compounds have solubility in the solvent to be used or affinity for the solvent to be used, and an example of the raw material compounds includes nitrate salt, oxide, hydroxide, carbonate salt, sulfate salt and acetate salt. When the raw material compounds are kneaded with the above-described cobalt compound to produce the catalyst, the nitrate salt, sulfate salt or acetate salt that are water-soluble are preferably used. Water, nitric acid, hydrochloric acid and a buffer solution can be used as the solvent, and water is particularly preferred as the solvent.

The raw material compound of the calcium compound (E) may be any one of calcium carbonate, calcium oxide and/or calcium hydroxide, and calcium carbonate is preferably used on the basis of the relation with the raw material compounds of the other indispensable elements. Even when calcium carbonate is used, a part of calcium carbonate thermally decomposed by burning at 600°C or higher to become calcium oxide in some cases. It has been known that calcium oxide is reacted with water in the air to become calcium hydroxide. Thus, it can be confirmed by XRD spectrum that even when calcium carbonate is used as the raw material compound, a part of the used calcium carbonate may exist as calcium oxide and calcium hydroxide in the present invention catalyst.

A method for drying the above-described solution or suspension is not particularly restricted, and for example, the solution or suspension is preferably heated at about 80°C or higher and about 150°C or lower, and preferably at 100°C or higher. The drying may be carried out under reduced pressure. The degree of the drying is not particularly restricted, and the drying may be appropriately carried out to the extent that the subsequent burning step is not difficult. For example, the solution or suspension may be dried to become slurry and paste or may be solidified, and preferably 90 mass% or more of the solvent is removed.

The burning condition is not particularly restricted and appropriately adjusted. For example, the burning is carried out at 200°C or higher and 1000°C or lower for 1 hour or more and 10 hours or less. The temperature for the burning is preferably 300°C or higher, more preferably 400°C or higher, and preferably 700°C or lower, more preferably 600°C or lower. The temperature for the burning may be increased continuously or stepwise.

The method for producing hydrogen and nitrogen according to the present invention comprises the steps of reducing the above-described ammonia decomposition catalyst, and decomposing ammonia into hydrogen and nitrogen by contacting a gas comprising ammonia with the reduced ammonia decomposition catalyst.

The present invention catalyst is preferably reduced before the step to decompose ammonia. In particular, cobalt oxide is changed to metal cobalt by the reduction treatment to improve the ammonia decomposition activity of the present invention catalyst. An example of the reduction treatment includes a method using a reducing gas such as hydrogen, hydrocarbon and carbon monoxide; and a method using a reducing agent such as hydrazine, lithium alminum hydride and tetramethyl borohydride. The method using a reducing gas is preferred, since the subsequent ammonia decomposition step can be successively carried out by changing the gas. The reducing gas may be diluted using an inert gas such as nitrogen, carbon dioxide and argon. The proportion of a reducing gas in the gas to be supplied may be appropriately adjusted in the case where the reducing gas is diluted and may be adjusted to, for example, 5 vol% or more and 50 vol% or less.

The reduction treatment is preferably adjusted to sufficiently reduce the cobalt oxide contained in the present invention catalyst. For example, when the present invention catalyst is reduced using a reducing gas, the temperature is preferably adjusted to 300°C or higher and 800°C or lower, more preferably 400°C or higher and 700°C or lower. The time for the reduction treatment is preferably 0.5 hours or more and 5 hours or less. Even if the reduction is not sufficient by the reduction treatment, the ammonia decomposition activity of the present invention catalyst may be increasingly improved, since ammonia is decomposed to produce hydrogen and thus the catalyst layer is in a reduced state.

Then, a gas containing ammonia is contacted with the reduced present invention catalyst to decompose ammonia into hydrogen and nitrogen. The ammonia-containing gas may be ammonia gas or may be a mixed gas of ammonia and an inert gas. When the mixed gas is used, the proportion of ammonia in the mixed gas may be adjusted to, for example, 50 vol% or more and 95 vol% or less, more preferably 70 vol% or more.

The flow rate of the ammonia-containing gas to be supplied to the catalyst layer containing the present invention catalyst may be appropriately adjusted in the range that ammonia can be efficiently decomposed into hydrogen and nitrogen, and the space velocity of the ammonia-containing gas to the ammonia decomposition catalyst may be preferably adjusted to, for example, 1,000 h⁻¹ or more. The space velocity can be adjusted to 2,000 h⁻¹ or more and can be further adjusted to 3,000 h⁻¹ or more, since the present invention catalyst is excellent in the decomposition activity of ammonia and has high strength. The upper limit of the space velocity is not particularly restricted, and the space velocity is preferably 100,000 h⁻¹ or less to suppress the amount of unreacted ammonia. The space velocity is more preferably 50,000 h⁻¹ or less, more preferably 30,000 h⁻¹ or less, and even more preferably 20,000 h⁻¹ or less.

The temperature for the ammonia decomposition reaction may be also appropriately adjusted in the range that ammonia can be efficiently decomposed into hydrogen and nitrogen, and may be adjusted to, for example, 250°C or higher and 800°C or lower. The temperature is preferably 300°C or higher, more preferably 400°C or higher, and preferably 700°C or lower, more preferably 600°C or lower. The reaction pressure can be adjusted to 0.1 MPa or more and 20 MPa or less as an absolute pressure. The reaction pressure is preferably 0.5 MPa or more, more preferably 0.8 MPa or more, and preferably 10 MPa or less. The reaction pressure may be adjusted using a back pressure valve or the like.

When the gas that has passed through the catalyst layer contains unreacted ammonia, the ammonia may be removed to be recovered by supplying the gas after the reaction to a dry adsorbent and a wet scrubber such as a sulfuric acid aqueous solution, and further hydrogen, nitrogen and an inert gas may be separated to be purified.

A ammonia decomposition catalyst that contains an iron group metal such as iron, cobalt and nickel in addition to a noble metal has been generally known, but the activity thereof is low and the durability thereof is also insufficient. On the one hand, the present invention catalyst has high ammonia decomposition activity even in a relatively low reaction temperature condition, though the present invention catalyst does not comprise a noble metal. As a result, the present invention catalyst can decompose ammonia under low temperature. Thus, the cost of equipment can be reduced, since a running cost can be reduced and a filling amount of the catalyst can be reduced. In addition, not only the life of the present invention catalyst is long but also ammonia can be decomposed under pressure, since the present invention catalyst has high strength due to the calcium compound (E) in addition to high activity. Thus, hydrogen and nitrogen, especially hydrogen, can be produced from ammonia very efficiently by using the present invention catalyst.

### EXAMPLES

Hereinafter, the present invention is described in more detail with Examples. The present invention is however not restricted to the following Examples in any way, and it is possible to work the present invention according to the Examples with an additional appropriate change within the range of the above descriptions and the following descriptions. Such a changed embodiment is also included in the technical scope of the present invention.

### Example 1: 73.4Co4Y1Ba1.6Zr//20CaCO₃

The catalyst having the composition of 73.4Co4Y1Ba1.6Zr//20CaCO₃ was produced as an ammonia decomposition catalyst by a kneading method. Each numerical value before each element in the composition formula in this disclosure represents a mass concentration (%) of the oxide of the element. For example, the catalyst of this Example contains 73.4 mass% of cobalt oxide, 4.0 mass% of yttrium oxide, 1.0 mass% of barium oxide, 1.6 mass% of zirconium oxide and 20 mass% of calcium carbonate.

Specifically, 3.7 g of yttrium nitrate n-hydrate (anhydride content amount: 72.3%) and 0.3 g of barium nitrate were dissolved in 10 g of ion-exchange water, and 1.3 g of zirconium oxynitrate aqueous solution containing 25% of zirconium in terms of oxide was mixed thereto to obtain a nitrate salt aqueous solution. Basic cobalt (II) carbonate (metal cobalt content amount: 49%) (23.9 g) was put on a porcelain plate, and the above-described nitrate salt aqueous solution was added thereto to be mixed well. The mixture was appropriately mixed using a spatula over a water bath of 95°C to become a concentrated paste. The thus obtained paste was dried at 110°C in a dryer to obtain a dried substance. The dried substance was burnt at 200°C for 2 hours and further at 600°C for 2 hours in a burning furnace. To the obtained burnt substance, 4.1 g of calcium carbonate was added and was sufficiently mixed. The mixture was pulverized to 150 µm or less to obtain catalyst powder.

### Example 2: 55.1Co3Y0.7Ba1.2Zr//40CaCO₃

The catalyst having the composition of 55.1Co3Y0.7Ba1.2Zr//40CaCO₃ was produced as an ammonia decomposition catalyst by a kneading method. Specifically, the catalyst was produced by a similar method to Example 1 except that the addition amounts of each raw material were changed to 2.8 g of yttrium nitrate n-hydrate (anhydride content: 72.3%), 0.3 g of barium nitrate, 1.0 g of zirconium oxynitrate aqueous solution containing 25% zirconium in terms of oxide, 17.9 g of basic cobalt (II) carbonate (metal cobalt content: 49%) and 8.2 g of calcium carbonate.

### Example 3: 55.1Co3Y0.7Ba1.2Zr/40CaCO₃

The catalyst having the composition of 55.1Co3Y0.7Ba1.2Zr/40CaCO₃ was produced as an ammonia decomposition catalyst by a kneading method. Specifically, 3.7 g of yttrium nitrate n-hydrate (anhydride content: 72.3%) and 0.3 g of barium nitrate were dissolved in 10 g of ion-exchange water, and further 1.3 g of zirconium oxynitrate aqueous solution containing 25% zirconium in terms of oxide was mixed thereto to produce a nitrate salt aqueous solution. Basic cobalt (II) carbonate (metal cobalt content amount: 49%) (23.9 g) was put on a porcelain plate, and the above-described nitrate salt aqueous solution was mixed. Then, 4.1 g of calcium carbonate was added thereto to be mixed. The mixture was appropriately mixed using a spatula over a water bath of 95°C to become a concentrated paste. The thus obtained paste was dried at 110°C in a dryer to obtain a dried substance. The dried substance was burnt at 200°C for 2 hours and further at 600°C for 2 hours in a burning furnace. The obtained burnt substance was pulverized to 150 µm or less to obtain catalyst powder. It was confirmed by XRD spectrum of the obtained catalyst powder that the catalyst powder contained calcium carbonate, calcium oxide and calcium hydroxide as calcium compounds.

### Example 4: 53.5Co3.8Y1Ba1.7Zr/40CaCO₃

The catalyst having the composition of 53.5Co3.8Y1Ba1.7Zr/40CaCO₃ was produced as an ammonia decomposition catalyst by a kneading method. Specifically, the catalyst was produced by a similar method to Example 3 except that the addition amounts of each raw material were changed to 3.4 g of yttrium nitrate n-hydrate (anhydride content: 72.3%), 0.3 g of barium nitrate, 1.2 g of zirconium oxynitrate aqueous solution containing 25% of zirconium in terms of oxide, 17.4 g of basic cobalt (II) carbonate (metal cobalt content amount: 49%) and 8.2 g of calcium carbonate.

### Example 5: 44.7Co3.1Y0.8Ba1.4Zr/50CaCO₃

The catalyst having the composition of 44.7Co3.1Y0.8Ba1.4Zr/50CaCO₃ was produced as an ammonia decomposition catalyst by a kneading method. Specifically, the catalyst was produced by a similar method to Example 3 except that the addition amounts of each raw material were changed to 2.9 g of yttrium nitrate n-hydrate (anhydride content: 72.3%), 0.3 g of barium nitrate, 1.0 g of zirconium oxynitrate aqueous solution containing 25% of zirconium in terms of oxide, 14.5 g of basic cobalt (II) carbonate (metal cobalt content amount: 49%) and 10.2 g of calcium carbonate.

### Example 6: 35.7Co2.5Y0.7Ba1.1Zr/60CaCO₃

The catalyst having the composition of 35.7Co2.5YO.7Ba1.1Zr/60CaCO₃ was produced as an ammonia decomposition catalyst by a kneading method. Specifically, the catalyst was produced by a similar method to Example 3 except that the addition amounts of each raw material were changed to 2.3 g of yttrium nitrate n-hydrate (anhydride content: 72.3%), 0.2 g of barium nitrate, 0.8 g of zirconium oxynitrate aqueous solution containing 25% of zirconium in terms of oxide, 11.6 g of basic cobalt (II) carbonate (metal cobalt content amount: 49%) and 12.2 g of calcium carbonate.

### Example 7: 48Co7.2Ce1.8Ba3Zr/40CaCO₃

The catalyst having the composition of 48Co7.2Ce1.8Ba3Zr/40CaCO₃ was produced as an ammonia decomposition catalyst by a kneading method. Specifically, 2.9 g of cerium nitrate aqueous solution containing 25% of cerium in terms of oxide and 1.7 g of zirconium oxynitrate aqueous solution containing 18% of zirconium in terms of oxide were mixed. To the thus obtained nitrate salt aqueous solution, 0.2 g of barium carbonate was added to be mixed to prepare a slurry solution in which a part of barium carbonate was dissolved. Basic cobalt (II) carbonate (metal cobalt content amount: 49%) (8.0 g) was put on a porcelain plate. The above-described slurry solution was added thereto to be mixed well. Further, 4.1 g of calcium carbonate was added thereto, and then the mixture was appropriately mixed using a spatula over a water bath of 95°C to become a concentrated paste. The catalyst was produced by a similar method to Example 3 hereinafter.

### Example 8: 56Co8.4Ce2.1Ba3.5Zr/30CaCO₃

The catalyst having the composition of 56Co8.4Ce2.1Ba3.5Zr/30CaCO₃ was produced as an ammonia decomposition catalyst by a kneading method. Specifically, the catalyst was produced by a similar method to Example 7 except that the addition amounts of each raw material were changed to 3.4 g of cerium nitrate aqueous solution containing 25% of cerium in terms of oxide, 2.0 g of zirconium oxynitrate aqueous solution containing 18% of zirconium in terms of oxide, 0.3 g of barium carbonate, 9.3 g of basic cobalt (II) carbonate (metal cobalt content amount: 49%) and 3.1 g of calcium carbonate.

### Example 9: 49.2Co5.4Y3.6Sr1.8Zr/40CaCO₃

The catalyst having the composition of 49.2Co5.4Y3.6Sr1.8Zr/40CaCO₃ was produced as an ammonia decomposition catalyst by a kneading method. Specifically, the catalyst was produced by a similar method to Example 3 except that the addition amounts of each raw material were changed to 9.6 g of cerium nitrate aqueous solution containing 25% of cerium in terms of oxide, 5.5 g of zirconium oxynitrate aqueous solution containing 18% of zirconium in terms of oxide, 0.8 g of strontium nitrate and 26.5 g of basic cobalt (II) carbonate (metal cobalt content amount: 49%), and strontium nitrate was added in place of barium nitrate.

### Comparative example 1: 91.8Co5Y1.2Ba2Zr

The catalyst having the composition of 91.8Co5Y1.2Ba2Zr was produced as an ammonia decomposition catalyst by a kneading method. Specifically, the catalyst was produced by a similar method to Example 1 except that 4.6 g of yttrium nitrate n-hydrate (anhydride content amount: 72.3%) and 0.4 g of barium nitrate were dissolved in 10 g of ion-exchange water, and the amounts of each raw material were changed to 1.6 g of zirconium oxynitrate aqueous solution containing 25% of zirconium in terms of oxide and 29.8 g of basic cobalt (II) carbonate (metal cobalt content amount: 49%), and calcium carbonate was not added.

### Comparative example 2: 73.4Co4Y1Ba1.6Zr//20Al₂O₃

The catalyst having the composition of 73.4Co4Y1Ba1.6Zr//20Al₂O₃ was produced as an ammonia decomposition catalyst by a kneading method. Specifically, the catalyst was produced by a similar method to Example 1 except that aluminum oxide was added in place of calcium carbonate.

### Comparative example 3: 73.4Co4Y1Bal.6Zr//20SiO₂

The catalyst having the composition of 73.4Co4Y1Bal.6Zr//20SiO₂ was produced as an ammonia decomposition catalyst by a kneading method. Specifically, the catalyst was produced by a similar method to Example 1 except that silicon oxide was added in place of calcium carbonate.

### Comparative example 4: 73Co16Ce11Zr

The catalyst having the composition of 73Co16Ce11Zr was produced by a coprecipitation method in accordance with Example 12 of JP 2010-94668 A.

### Comparative example 5: 5%Ru/Al₂O₃

In 12.5 g of ruthenium nitrate aqueous solution having ruthenium content proportion of 4.0 mass%, 10 g of γ-alumina powder having BET specific surface area of 103 m²/g was homogeneously immersed so that the concentration was adjusted to 5 mass% in terms of Ru. The mixture was dried at 120°C and then burnt at 400°C for 2 hours to obtain catalyst powder.

### Test example 1: Evaluation of ammonia decomposition activity

A cylindrical column was filled with the catalyst powder of Examples 1 to 9 and Comparative examples 1 to 5, and the catalyst was shaped by compacting the catalyst using a press machine. The press-shaped substance was pulverized and sieved into 300 to 600 µm to be granular as an evaluation sample. The thus obtained evaluation sample (0.6 mL) and quartzose sand (0.9 mL) were preliminarily mixed well, and a tubular flow reactor having the inner diameter of 0.8 cm was filled with the mixture as a catalyst layer. Further, 3.0 g of quartzose sand was added on the catalyst layer as a layer for preliminarily heating the gas.

The tubular flow reactor filled with the evaluation sample was placed in a tubular furnace, and the temperature of the tubular furnace was increased to 600°C under nitrogen flow. Then, a mixed gas of 10 vol% hydrogen and 90 vol% nitrogen was supplied into the reactor for 1 hour to subject the catalyst to hydrogen reduction treatment.

The gas in the tubular reactor was replaced by supplying nitrogen gas into the reactor for a short time after the hydrogen reduction pretreatment, the supply of nitrogen gas was stopped, and 100 vol% of ammonia gas to the volume of each filling catalyst was supplied at the rate of 170 mL/min. The reaction pressure was increased to 0.9 MPa as absolute pressure using a back pressure valve, and then the temperature of the tubular furnace was adjusted to the temperature demonstrated in Table 1, and the ammonia decomposition activity was measured. The reactor outlet gas contained hydrogen, nitrogen and unreacted ammonia. The unreacted ammonia was captured using sulfuric acid aqueous solution, and the flow rate of the gas consisting of the remaining hydrogen and nitrogen was measured using a soap film flow meter. The decomposition rate was calculated from the measured value using the following calculation formula. The result is shown in Table 1. In Table 1, the "//" means that calcium carbonate or the like was added after the other catalyst components were burnt, and the "/" means that calcium carbonate or the like was mixed with the other catalyst components and the mixture was burnt. Ammonia decomposition rate (%) = [Amount of gas produced by decomposition (hydrogen + nitrogen) (L) / Amount of supplied ammonia gas (L) × 2] × 100

**Table 1**

| | Catalyst composition | Gas space velocity | Tubular furnace temperature | | | |
|---|---|---|---|---|---|---|
| | | | 570°C | 540°C | 510°C | 480°C |
| Example 1 | 73.4Co4Y1Ba1.6Zr//20CaCO₃ | | 99% | 98% | 79% | 56% |
| Example 2 | 55.1Co3Y0.7Ba1.2Zr//40CaCO₃ | | 99% | 95% | 74% | 52% |
| Example 3 | 55.1Co3Y0.7Ba1.2Zr/40CaCO₃ | | 99% | 97% | 81% | 58% |
| Example 4 | 53.5Co3.8Y1Ba1.7Zr/40CaCO₃ | | 99% | 98% | 81% | 59% |
| Example 5 | 44.7Co3.1Y0.8Ba1.4Zr/50CaCO₃ | | 99% | 96% | 79% | 57% |
| Example 6 | 35.7Co2.5Y0.7Ba1.1Zr/60CaCO₃ | | 99% | 95% | 75% | 53% |
| Example 7 | 48Co7.2Ce1.8Ba3Zr/40CaCO₃ | | 99% | 95% | 73% | 51% |
| Example 8 | 56Co8.4Ce2.1Ba3.5Zr/30CaCO₃ | | 99% | 95% | 73% | 50% |
| Example 9 | 49.2Co5.4Y3.6Sr1.8Zr/40CaCO₃ | 17000/hr | 99% | 94% | 73% | 51% |
| Comparative example 1 | 91.8Co5Y1.2Ba2Zr | | 99% | 98% | 82% | 60% |
| Comparative example 2 | 73.4Co4Y1Ba1.6Zr//20Al₂O₃ | | 99% | 91% | 70% | 49% |
| Comparative example 3 | 73.4Co4Y1Ba1.6Zr//20SiO₂ | | 96% | 78% | 55% | 36% |
| Comparative example 4 | 73Co16Ce11Zr | | 89% | 58% | 45% | 20% |
| Comparative example 5 | 5%Ru/Al₂O₃ | | 84% | 59% | 41% | 22% |

It is clear from the result shown in Table 1 that the ammonia decomposition activity of each Example catalyst is not significantly decreased and almost maintained by containing calcium carbonate in comparison with Comparative example 1. In addition, it was found that the base metal catalyst of Example clearly has excellent low temperature activity in comparison with the conventional noble metal catalyst of Comparative example 5.

### Test example 2: Measurement of strength

The catalyst powder of Examples 1, 3, 7 and 9 as the representative examples of the present invention catalyst and the catalyst of Comparative examples 1 to 4 were shaped into a cylindrical pellet, and the strength thereof was measured. Specifically, a shaping auxiliary agent and an appropriate amount of pure water were added to each catalyst powder, and the mixture was kneaded using a kneader. Then, the mixture was extruded to be shaped into a cylindrical column having a diameter of 5 mm and a length of 6 mm and dried at 120°C. Next, burning was carried out at 200°C for 2 hours and further at 400°C for 2 hours similarly to Example 3 and Comparative example 1 to prepare the pellet for strength test. The strength of the substance burnt at 400°C of each pellet catalyst and the strength of the sample subjected to the hydrogen reduction treatment at 600°C for 1 hour similarly to Test example 1 in the side direction of the cylindrical column were measured using a Kiya hardness tester. The result is shown in Table 2.

**Table 2**

| | Catalyst composition | Pellet catalyst strength | |
|---|---|---|---|
| | | After burning at 400°C | After hydrogen reduction at 600°C |
| Example 1 | 73.4Co4Y1Ba1.6Zr//20CaCO₃ | 95.1 N | 80.5 N |
| Example 3 | 55.1Co3Y0.7Ba1.2Zr/40CaCO₃ | 99.0 N | 137.3 N |
| Example 7 | 48Co7.2Ce1.8Ba3Zr/40CaCO₃ | 97.1 N | 133.3 N |
| Example 9 | 49.2Co5.4Y3.6Sr1.8Zr/40CaCO₃ | 98.1 N | 135.3 N |
| Comparative example 1 | 91.8Co5Y1.2Ba2Zr | 93.2 N | 2.9 N |
| Comparative example 2 | 73.4Co4Y1Ba1.6Zr//20Al₂O₃ | 94.8 N | 39.4 N |
| Comparative example 3 | 73.4Co4Y1Ba1.6Zr//20SiO₂ | 94.9 N | 39.2 N |
| Comparative example 4 | 73Co16Ce11Zr | 90.2 N | 2.0 N |

It could be observed as the result shown in Table 2 that the strength of each catalyst of Comparative examples which did not contain calcium carbonate was remarkably decreased after the reduction treatment. On the one hand, each sample of Examples maintains excellent strength even after the reduction treatment. It was thus experimentally demonstrated that the ammonia decomposition catalyst according to the present invention is very suitable for industrially decomposition of ammonia.

## Claims

1. An ammonia decomposition catalyst,
comprising:
cobalt (A);
one or more rare earth elements (B) selected from cerium, yttrium and lanthanum;
one or more alkaline-earth metal elements (C) selected from barium and strontium;
zirconium (D); and
one or more calcium compounds (E) selected from calcium carbonate, calcium oxide and calcium hydroxide;
wherein the ammonia decomposition catalyst comprises the cobalt (A), the rare earth element (B), the alkaline-earth metal element (C) and the zirconium (D) as metals or oxides.

2. The ammonia decomposition catalyst according to claim 1, wherein a content proportion of the cobalt (A) is 30 mass% or more in terms of oxide.

3. The ammonia decomposition catalyst according to claim 1 or 2, wherein:
a content proportion of the rare earth element (B) is 1 mass% or more and 24 mass% or less in terms of oxide,
a content proportion of the alkaline-earth metal element (C) is 0.1 mass% or more and 10 mass% or less in terms of oxide, and
a content proportion of the zirconium (D) is 0.1 mass% or more and 10 mass% or less in terms of oxide.

4. The ammonia decomposition catalyst according to any one of claims 1 to 3, wherein a content proportion of the calcium compound (E) is 10 mass% or more.

5. A method for producing hydrogen and nitrogen, the method comprising the steps of:
subjecting the ammonia decomposition catalyst according to any one of claims 1 to 4 to a reduction treatment, and
decomposing ammonia into hydrogen and nitrogen by contacting a gas comprising ammonia with the ammonia decomposition catalyst subjected to the reduction treatment.

6. Use of a catalyst for decomposing ammonia, wherein:
the catalyst comprises cobalt (A); one or more rare earth elements (B) selected from cerium, yttrium and lanthanum; one or more alkaline-earth metal elements (C) selected from barium and strontium; zirconium (D); and one or more calcium compounds (E) selected from calcium carbonate, calcium oxide and calcium hydroxide; and
the ammonia decomposition catalyst comprises the cobalt (A), the rare earth element (B), the alkaline-earth metal element (C) and the zirconium (D) as metals or oxides.

7. The use according to claim 6, wherein a content proportion of the cobalt (A) in the catalyst is 30 mass% or more in terms of oxide.

8. The use according to claim 6 or 7, wherein:
a content proportion of the rare earth element (B) in the catalyst is 1 mass% or more and 24 mass% or less in terms of oxide,
a content proportion of the alkaline-earth metal element (C) in the catalyst is 0.1 mass% or more and 10 mass% or less in terms of oxide, and
a content proportion of the zirconium (D) in the catalyst is 0.1 mass% or more and 10 mass% or less in terms of oxide.

9. The use according to any one of claims 6 to 8, wherein a content proportion of the calcium compound (E) in the catalyst is 10 mass% or more.

## Patentansprüche

1. Katalysator für die Zersetzung von Ammoniak,
umfassend:
Kobalt (A);
ein oder mehrere Seltenerdelemente (B), ausgewählt aus Cer, Yttrium und Lanthan;
ein oder mehrere Erdalkalimetallelemente (C), ausgewählt aus Barium und Strontium;
Zirkonium (D); und
eine oder mehrere Calciumverbindungen (E), ausgewählt aus Calciumcarbonat, Calciumoxid und Calciumhydroxid;
wobei der Katalysator für die Zersetzung von Ammoniak das Kobalt (A), das Seltenerdelement (B), das Erdalkalimetallelement (C) und das Zirconium (D) als Metalle oder Oxide umfasst.

2. Katalysator für die Zersetzung von Ammoniak nach Anspruch 1, wobei ein Gehaltsanteil des Kobalts (A) 30 Massen% oder mehr hinsichtlich Oxids beträgt.

3. Katalysator für die Zersetzung von Ammoniak nach Anspruch 1 oder 2, wobei:
ein Gehaltsanteil des Seltenerdelements (B) 1 Massen% oder mehr und 24 Massen% oder weniger hinsichtlich Oxids beträgt,
ein Gehaltsanteil des Erdalkalimetallelements (C) 0,1 Massen% oder mehr und 10 Massen% oder weniger hinsichtlich Oxids beträgt, und
ein Gehaltsanteil des Zirkoniums (D) 0,1 Massen% oder mehr und 10 Massen% oder weniger hinsichtlich Oxids beträgt.

4. Katalysator für die Zersetzung von Ammoniak nach einem der Ansprüche 1 bis 3, wobei ein Gehaltsanteil der Calciumverbindung (E) 10 Massen% oder mehr beträgt.

5. Verfahren zur Herstellung von Wasserstoff und Stickstoff, wobei das Verfahren die Schritte umfasst:
das Unterziehen des Katalysators für die Zersetzung von Ammoniak nach einem der Ansprüche 1 bis 4 einer Reduktionsbehandlung, und
das Zersetzen von Ammoniak in Wasserstoff und Stickstoff durch Inkontaktbringen eines Gases, das Ammoniak umfasst, mit dem Katalysator für die Zersetzung von Ammoniak, welcher der Reduktionsbehandlung unterzogen wurde.

6. Verwendung eines Katalysators für die Zersetzung von Ammoniak, wobei:
der Katalysator Kobalt (A), ein oder mehrere Seltenerdelemente (B), ausgewählt aus Cer, Yttrium und Lanthan; ein oder mehrere Erdalkalimetallelemente (C), ausgewählt aus Barium und Strontium, Zirkonium (D) und eine oder mehrere Calciumverbindungen (E), ausgewählt aus Calciumcarbonat, Calciumoxid und Calciumhydroxid, umfasst; und
der Katalysator für die Zersetzung von Ammoniak das Kobalt (A), das Seltenerdmetall (B), das Erdalkalimetallelement (C) und das Zirkonium (D) als Metalle oder Oxide umfasst.

7. Verwendung nach Anspruch 6, wobei ein Gehaltsanteil des Kobalts (A) im Katalysator 30 Massen% oder mehr hinsichtlich Oxids beträgt.

8. Verwendung nach Anspruch 6 oder 7, wobei:
ein Gehaltsanteil des Seltenerdelements (B) im Katalysator 1 Massen% oder mehr und 24 Massen% oder weniger hinsichtlich Oxids beträgt,
ein Gehaltsanteil des Erdalkalimetallelements (C) im Katalysator 0,1 Massen% oder mehr und 10 Massen% oder weniger hinsichtlich Oxids beträgt, und
ein Gehaltsanteil des Zirkoniums (D) im Katalysator 0,1 Massen% oder mehr und 10 Massen% oder weniger hinsichtlich Oxids beträgt.

9. Verwendung nach einem der Ansprüche 6 bis 8, wobei ein Gehaltsanteil der Calciumverbindung (E) im Katalysator 10 Massen% oder mehr beträgt.

## Revendications

1. Catalyseur de décomposition d'ammoniac,
comprenant :
du cobalt (A) ;
un ou plusieurs éléments de terres rares (B) sélectionnés parmi le cérium, l'yttrium et le lanthane ;
un ou plusieurs éléments de métal alcalino-terreux (C) sélectionnés parmi le baryum et le strontium ;
du zirconium (D) ; et
un ou plusieurs composés de calcium (E) sélectionnés parmi le carbonate de calcium, l'oxyde de calcium et l'hydroxyde de calcium ;
dans lequel le catalyseur de décomposition d'ammoniac comprend le cobalt (A), l'élément de terres rares (B), l'élément de métal alcalino-terreux (C) et le zirconium (D) comme métaux ou oxydes.

2. Catalyseur de décomposition d'ammoniac selon la revendication 1, dans lequel une proportion en teneur du cobalt (A) est de 30 % en masse ou plus en termes d'oxyde.

3. Catalyseur de décomposition d'ammoniac selon la revendication 1 ou 2, dans lequel :
une proportion en teneur de l'élément de terres rares (B) est de 1 % en masse ou plus et 24 % en masse ou moins en termes d'oxyde,
une proportion en teneur de l'élément de métal alcalino-terreux (C) est de 0,1 % en masse ou plus et 10 % en masse ou moins en termes d'oxyde, et
une proportion en teneur du zirconium (D) est de 0,1 % en masse ou plus et 10 % en masse ou moins en termes d'oxyde.

4. Catalyseur de décomposition d'ammoniac selon l'une quelconque des revendications 1 à 3, dans lequel une proportion en teneur du composé de calcium (E) est de 10 % en masse ou plus.

5. Procédé de production d'hydrogène et d'azote, le procédé comprenant les étapes consistant à :
soumettre le catalyseur de décomposition d'ammoniac selon l'une quelconque des revendications 1 à 4 à un traitement réducteur, et
décomposer l'ammoniac en hydrogène et azote en mettant en contact un gaz comprenant de l'ammoniac avec le catalyseur de décomposition d'ammoniac soumis au traitement réducteur.

6. Utilisation d'un catalyseur pour décomposer de l'ammoniac, dans laquelle :
le catalyseur comprend du cobalt (A) ; un ou plusieurs éléments de terres rares (B) sélectionnés parmi le cérium, l'yttrium et le lanthane ; un ou plusieurs éléments de métal alcalino-terreux (C) sélectionnés parmi le baryum et le strontium ; du zirconium (D) ; et un ou plusieurs composés de calcium (E) sélectionnés parmi le carbonate de calcium, l'oxyde de calcium et l'hydroxyde de calcium ; et
le catalyseur de décomposition d'ammoniac comprend le cobalt (A), l'élément de terres rares (B), l'élément de métal alcalino-terreux (C) et le zirconium (D) comme métaux ou oxydes.

7. Utilisation selon la revendication 6, dans laquelle une proportion en teneur du cobalt (A) dans le catalyseur est de 30 % en masse ou plus en termes d'oxyde.

8. Utilisation selon la revendication 6 ou 7, dans laquelle :
une proportion en teneur de l'élément de terres rares (B) dans le catalyseur est de 1 % en masse ou plus et 24 % en masse ou moins en termes d'oxyde,
une proportion en teneur de l'élément de métal alcalino-terreux (C) dans le catalyseur est de 0,1 % en masse ou plus et 10 % en masse ou moins en termes d'oxyde, et
une proportion en teneur du zirconium (D) dans le catalyseur est de 0,1 % en masse ou plus et 10 % en masse ou moins en termes d'oxyde.

9. Utilisation selon l'une quelconque des revendications 6 à 8, dans laquelle une proportion en teneur du composé de calcium (E) dans le catalyseur est de 10 % en masse ou plus.
